# EUROPEAN PATENT SPECIFICATION

(11) **EP 3 489 836 B1**
(45) Date of publication and mention of the grant of the patent: **23.02.2022**
(21) Application number: 17833314.2
(22) Date of filing: 19.05.2017
(51) Int. Cl.: G06F 13/20, G06F 13/38, G06F 13/42

(54) **DATA PROCESSING METHOD AND SYSTEM, PERIPHERAL COMPONENT INTERCONNECT EXPRESS DEVICE AND HOST**
DATENVERARBEITUNGSVERFAHREN UND -SYSTEM, PERIPHERIEGERÄTEVERBINDUNGSEXPRESSVORRICHTUNG UND HOST
SYSTÈME ET PROCÉDÉ DE TRAITEMENT DE DONNÉES, DISPOSITIF EXPRESS D'INTERCONNEXION DE COMPOSANTS PÉRIPHÉRIQUES ET HÔTE

(30) Priority: 25.07.2016 CN 201610589688
(43) Date of publication of application: 29.05.2019
(73) Proprietor: ZTE Corporation, Shenzhen, Guangdong 518057 (CN)
(72) Inventor: MA, Weiwei, Shenzhen Guangdong 518057 (CN)
(74) Representative: Aipex B.V.
(86) International application number: PCT/CN2017/085178
(87) International publication number: WO 2018/019009

(56) References cited:
- WO-A2-2006/121739
- CN-A- 101 901 198
- CN-A- 103 003 806
- CN-A- 103 595 822
- CN-A- 103 701 710
- CN-A- 105 007 329
- US-A1- 2007 112 995
- Hewlett: "Universal Serial Bus 3.0 Specification", , 12 November 2008 (2008-11-12), XP055203464, Retrieved from the Internet: URL:http://www.gaw.ru/pdf/interface/usb/US B%203%200_english.pdf

## Description

### TECHNICAL FIELD

The present invention relates to the field of communications and, in particular, to a data processing method and system, and a peripheral component interconnect express device and host.

### BACKGROUND

With the development of communication technologies, the data transmission has an increasing speed. A Universal Serial Bus (USB) 3.0 is one of bus interface technologies with a wide application and capable of supporting high-speed data transmission technologies such as an LTE (Long Term Evolution) category 9 (CAT9) wireless network technology. In USB interface technologies including the above USB 3.0, a plurality of data transmission channels can be established between a USB device and a host to implement transmission of different types of data. However, due to serious interference between the USB interface technologies and wireless signals such as Wireless Fidelity (WiFi), a normal operation of the USB device will be affected, which limits the application of the device in wireless communications. Peripheral Component Interconnect Express (PCIe) is another high-speed data transmission bus and interface standard. Devices connected according to the PCIe standard are allocated with exclusive channel bandwidths and do not share a bus bandwidth. The PCIe standard mainly supports active power management, error reporting, end-to-end reliable transmission, hot swap, Quality of Service (QOS) and other functions. The PCIe interface technology does not have serious interference with wireless signals compared with the USB interface technologies. However, the PCIe interface technology does not support multi-channel data transmission, which also limits its applications. Therefore, how to enable the PCIe interface technology to support the multi-channel data transmission and to be well applied to the wireless communications to achieve high-speed and stable data transmission is a problem which requires consideration presently.

Document XP055203464 discloses a Universal Serial Bus 3.0 Specification, in which the batch flow is described. A standard USB Bulk Pipe represents the ability to move single stream of (FIFO) data between the host and a device via a host memory buffer and a device endpoint.

SuperSpeed streams provide protocol-level support for a multi-stream model and utilize the "ream" pipe communications mode.

Document US20070112995A1 discloses An interconnect apparatus, a computer system, a method of operating an interconnect apparatus. An interconnect apparatus provides for the buffering of information in respective transaction buffers according to transaction type. An additional buffer is dynamically assignable to one of the transaction buffers where additional capacity is required by that transaction buffer.

### SUMMARY

Embodiments of the present invention provide a data processing method and system, and a peripheral component interconnect express device and host according to the independent claims, to mainly solve the technical problem in the existing art that PCIe interface technology does not support multi-channel data transmission and thus multi-channel data processing cannot be implemented between a device and a host based on the PCIe interface technology. Further improvements are provided in the dependent claims.

The present invention has the beneficial effects described below.

According to the data processing method and system, the peripheral component interconnect express device and host and the computer storage medium provided by the embodiments of the present invention, the multi-channel identification information is generated according to the data type currently supported; the to-be-sent data is pre-processed according to the multi-channel identification information to obtain the first multi-channel identification data, and the first multi-channel identification data is sent to the host side through a PCIe interface the multi-channel identification information is reported to the host side through the PCIe interface; and the second multi-channel identification data sent by the host side through the PCIe interface, is
received and parsed, where the second multi-channel identification data is obtained from the data pre-processing by the host side according to the multi-channel identification information. The present invention enables the device and the host based on the PCIe interface technology to implement the multi-channel data transmission and the corresponding data parsing through the multi-channel identification information, thereby ensuring high-speed data transmission, effectively reducing interference with wireless signals in the data transmission and ensuring system stability.

### BRIEF DESCRIPTION OF DRAWINGS

FIG. 1 is a flowchart of a data processing method according to an embodiment 1 of the present invention;
FIG. 2 is a flowchart of a data processing method according to an embodiment 2 of the present invention;
FIG. 3 is a schematic diagram of a PCIe device according to an embodiment 3 of the present invention;
FIG. 4 is a schematic diagram of a PCIe host according to the embodiment 3 of the present invention;
FIG. 5 is a schematic diagram of a data processing system according to the embodiment 3 of the present invention; and
FIG. 6 is a flowchart of a PCIe-based multi-channel data processing method according to an embodiment 4 of the present invention.

### DETAILED DESCRIPTION

The present invention will be described in detail through embodiments with reference to the accompanying drawings.

### Embodiment 1

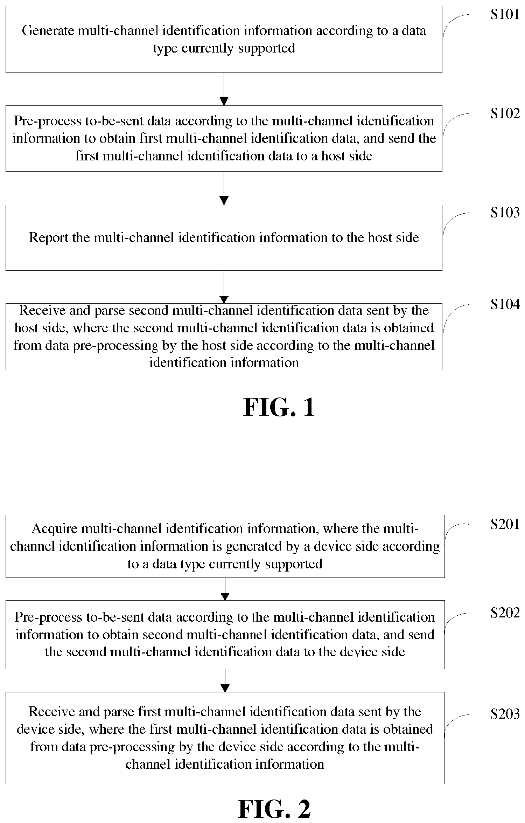

To enable a device and a host in communication to implement multi-channel data processing based on a PCIe interface technology, the embodiment provides a data processing method. With reference to FIG. 1, the method includes the steps described below.

In step S101, multi-channel identification information is generated according to a data type currently supported.

In the embodiment, the step of generating the multi-channel identification information according to the data type currently supported includes the following steps: local function configuration information is analyzed and the data type currently supported is determined according to the local function configuration information; and when the data type currently supported includes at least two data types, the multi-channel identification information corresponding to each of the at least two data types is generated.

After the device which communicates with the host based on the PCIe interface technology is powered on, the local function configuration information of the device is analyzed, that is, a function supported by the device is determined, and a data type corresponding to each function is determined. The data type is the data type currently supported by the device. If the device only supports one data type, the device is determined to be a single-function device, the multi-channel identification information is not required to be generated for the device, and single-channel data transmission is implemented between the device and the host. If the device supports at least two data types, the multi-channel identification information is generated according to the at least two data types.

In the embodiment, the corresponding multi-channel identification information is generated according to the data types, which includes the following steps: a plurality of data transmission channels are defined according to the data types, where the channels are a virtual data transmission channels; and a multi-channel identifier, which may be a channel ID, may be defined for each channel for uniquely identifying each channel. In the embodiment, data grouping is implemented through the channel ID so that the multi-channel data transmission may be implemented.

In step S102, to-be-sent data is pre-processed according to the multi-channel identification information to obtain first multi-channel identification data, and the first multi-channel identification data is sent to a host side.

After obtaining the multi-channel identification information, a device side completes local multi-channel data processing configuration according to the multi-channel identification information. In the embodiment, the step in which the device side completes the local multi-channel data processing configuration according to the multi-channel identification information includes: determining, according to the multi-channel identification information, a correspondence between the data type corresponding to each function and the multi-channel identification information and a correspondence between each data processing function unit and the multi-channel identification information; storing the above correspondences; and performing the corresponding data processing according to the correspondences when the device side performs the data transmission with the host side. The step in which the device side pre-processes the to-be-sent data according to the multi-channel identification information to obtain the first multi-channel identification data includes the following step: the device side adds, according to a data type of the to-be-sent data to be sent to the host side, the multi-channel identification information corresponding to the to-be-sent data to a data packet of the to-be-sent data to obtain the first multi-channel identification data. The device side sends the first multi-channel identification data to the host side so that the host side performs corresponding data processing.

It should be understood that the first multi-channel identification data in the embodiment refers to data sent by the device side to the host side, that is, the data sent by the device side to the host side is collectively referred to as the first multi-channel identification data. The first multi-channel identification data may carry different multi-channel identifiers after being pre-processed according to the multi-channel identification information. That is, the first multi-channel identification data may be A-type data which carries a corresponding channel identifier such as channel ID-A, or B-type data which carries a corresponding channel identifier such as channel ID-B. Certainly, the first multi-channel identification data may also be data of another type supported by the device side which carries a corresponding channel identifier.

In step S103, the multi-channel identification information is reported to the host side.

After the device generates the multi-channel identification information, the device needs to report the multi-channel identification information to the host, which enables the host to complete multi-channel data processing configuration according to the multi-channel identification information, including the following steps: determining, according to the multi-channel identification information, the correspondence between the data type corresponding to each function and the multi-channel identification information and the correspondence between each data processing function unit and the multi-channel identification information and storing the above correspondences to enable the host side to perform the corresponding data processing according to the correspondences when the host side performs the data transmission with the device side. For example, the host side adds the multi-channel identification information to a data packet sent to the device side, or processes the data carrying the multi-channel identification information and sent by the device side. A step in which the host side pre-processes to-be-sent data on the host side according to the multi-channel identification information to obtain second multi-channel identification data includes the following step: the host side adds, according to a data type of the to-be-sent data on the host side, the multi-channel identification information corresponding to the to-be-sent data to a data packet of the to-be-sent data to obtain the second multi-channel identification data. The host side sends the second multi-channel identification data to the corresponding device side so that the device side processes the second multi-channel identification data.

Since the PCIe interface technology supports a capabilities structure, the device side may report the multi-channel identification information to the host through the capabilities structure. Certainly, the multi-channel identification information may be encapsulated into a message of another type and reported to the host. A form of reporting the multi-channel identification information is not limited in the embodiment.

In the embodiment, the step of reporting the multi-channel identification information to the host includes: reporting the multi-channel identification information to the host, or receiving an acquisition instruction from the host and reporting the multi-channel identification information to the host. The device may directly report the multi-channel identification information to the host after the multi-channel identification information is generated. The device may also report the multi-channel identification information to the host in response to an acquisition request initiated by the host. A reporting process may be set as required.

In step S104, the second multi-channel identification data sent by the host side is received and parsed.

The step in which the device side receives and parses the second multi-channel identification data sent by the host side includes the following steps: the second multi-channel identification data is parsed to obtain the multi-channel identification information, and a data packet of the second multi-channel identification data is parsed according to the multi-channel identification information. The second multi-channel identification data is submitted to a corresponding data processing function unit to parse the data packet of the second multi-channel identification data according to the multi-channel identification information. The data processing function unit refers to a function protocol stack or a function processing function corresponding to the second multi-channel identification data.

It should be understood that the second multi-channel identification data in the embodiment refers to data sent by the host side to the device side, that is, the data sent by the host side to the device side is collectively referred to as the second multi-channel identification data. The second multi-channel identification data may carry different multi-channel identifiers after being pre-processed according to the multi-channel identification information. That is, the second multi-channel identification data may be A-type data which carries a corresponding channel identifier such as channel ID-A, or B-type data which carries a corresponding channel identifier such as channel ID-B. Certainly, the second multi-channel identification data may also be data of another type supported by the host side which carries a corresponding channel identifier.

In a PCIe-based multi-channel data processing method provided by the embodiment, the multi-channel identification information is generated according to the data type currently supported; the to-be-sent data is pre-processed according to the multi-channel identification information to obtain the first multi-channel identification data, and the first multi-channel identification data is sent to the host side; the multi-channel identification information is reported to the host side so that the host side may pre-process the to-be-sent data on the host side according to the multi-channel identification information to obtain the second multi-channel identification data; and the second multi-channel identification data sent by the host side is received and parsed. The method enables the device and the host based on the PCIe interface technology to implement the multi-channel data transmission and the corresponding data parsing through the multi-channel identification information, thereby ensuring high-speed data transmission, effectively reducing interference with wireless signals in the data transmission and ensuring system stability.

### Embodiment 2

To enable a device and a host in communication to implement multi-channel data processing based on a PCIe interface technology, the embodiment provides a PCIe-based multi-channel data processing method. With reference to FIG. 2, the method includes the steps described below.

In step S201, multi-channel identification information is acquired, where the multi-channel identification information is generated by a device side according to a data type currently supported.

To implement the multi-channel data processing with the device side, the host acquires the multi-channel identification information generated by the device side and completes multi-channel data processing configuration according to the multi-channel identification information. In the embodiment, the step in which the host acquires the multi-channel identification information includes: receiving the multi-channel identification information reported by the device, or sending an acquisition instruction to the device and acquiring the multi-channel identification information. That is, after the device generates the multi-channel identification information, if the device directly reports the multi-channel identification information, the host receives the multi-channel identification information directly reported by the device and completes corresponding configuration. Certainly, the host may also send an acquisition request to the device in real time or periodically to acquire the multi-channel identification information generated by the device. An acquisition process may be set as required.

In step S202, to-be-sent data is pre-processed according to the multi-channel identification information to obtain second multi-channel identification data, and the second multi-channel identification data is sent to the device side.

After the host acquires the multi-channel identification information, the host completes local multi-channel data processing configuration according to the multi-channel identification information, which includes: determining the data type supported by the device side (that is, a function supported by the device side) according to the multi-channel identification information and registering a data processing function unit corresponding to the multi-channel identification information. The host stores a correspondence between each data type and the multi-channel identification information and a correspondence between each data processing function unit and the multi-channel identification information, and performs the corresponding data processing according to the correspondences when the device side performs the data transmission with the host side. The step in which the host side pre-processes the to-be-sent data on the host side according to the multi-channel identification information to obtain the second multi-channel identification data includes the following step: the host side adds, according to a data type of the to-be-sent data on the host side, the multi-channel identification information corresponding to the to-be-sent data to a data packet of the to-be-sent data to obtain the second multi-channel identification data. The host side sends the second multi-channel identification data to the corresponding device side so that the device side processes the second multi-channel identification data.

In step S203, first multi-channel identification data sent by the device side is received and parsed, where the first multi-channel identification data is obtained from data pre-processing by the device side according to the multi-channel identification information.

After the host side registers the data processing function unit corresponding to the multi-channel identification information, the host side receives the first multi-channel identification data sent by the device side and parses the first multi-channel identification data to obtain the multi-channel identification information. The first multi-channel identification data is submitted to the corresponding data processing function unit to parse a data packet of the first multi-channel identification data according to the multi-channel identification information. The data processing function unit refers to a function protocol stack or a function processing function corresponding to the first multi-channel identification data.

In the PCIe-based multi-channel data processing method provided by the embodiment, the multi-channel identification information is acquired; the to-be-sent data on the host side is pre-processed according to the multi-channel identification information to obtain the second multi-channel identification data, and the second multi-channel identification data is sent to the device side; and the first multi-channel identification data sent by the device side is received and parsed. The method enables the device and the host based on the PCIe interface technology to implement the multi-channel data transmission and the corresponding data processing, thereby ensuring high-speed data transmission, effectively reducing interference with wireless signals in the data transmission and ensuring system stability.

### Embodiment 3

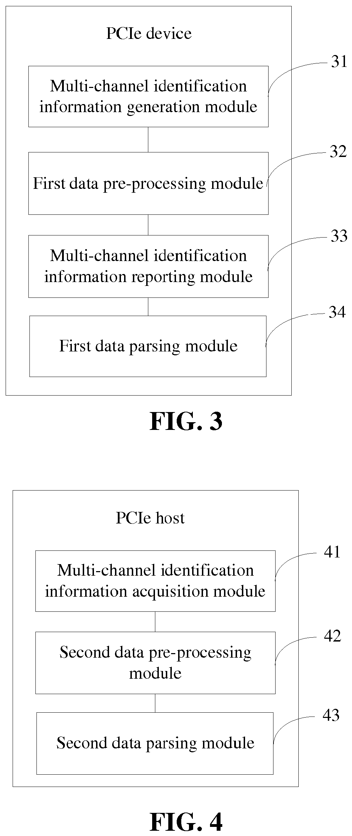

The embodiment provides a PCIe device which communicates with a host based on PCIe. The host here is a PCIe host. The PCIe device may implement multi-channel data processing with the PCIe host. Referring to FIG. 3, the PCIe device includes a multi-channel identification information generation module 31, a first data pre-processing module 32, a multi-channel identification information reporting module 33 and a first data parsing module 34. The multi-channel identification information generation module 31 is configured to generate multi-channel identification information according to a data type currently supported. The first data pre-processing module 32 is configured to pre-process to-be-sent data according to the multi-channel identification information to obtain first multi-channel identification data, and send the first multi-channel identification data to a host side. The multi-channel identification information reporting module 33 is configured to report the multi-channel identification information to the host side. The first data parsing module 34 is configured to receive and parse second multi-channel identification data sent by the host side, where the second multi-channel identification data is obtained from data pre-processing by the host side according to the multi-channel identification information.

In the embodiment, the multi-channel identification information generation module 31 generates the multi-channel identification information according to the data type currently supported, which includes the following steps: the multi-channel identification information generation module 31 analyzes local function configuration information of the PCIe device and determines the data type currently supported according to the function configuration information; and when the data type currently supported includes at least two data types, the multi-channel identification information generation module 31 generates the multi-channel identification information corresponding to each of the at least two data types. After the PCIe device which communicates with the PCIe host based on a PCIe interface technology is powered on, the multi-channel identification information generation module 31 analyzes the local function configuration information of the PCIe device, determines a function supported by the PCIe device and determines a data type corresponding to each function. The data type is the data type currently supported by the PCIe device. If the PCIe device only supports one data type, the PCIe device is determined to be a single-function device, the multi-channel identification information is not required to be generated for the PCIe device, and single-channel data transmission is implemented between the PCIe device and the PCIe host. If the PCIe device supports at least two data types, the multi-channel identification information is generated according to the at least two data types. The multi-channel identification information in the embodiment may be a channel ID. The multi-channel identification information generation module 31 may be further configured to complete multi-channel data processing configuration on the device side according to the multi-channel identification information, which includes: determining, according to the multi-channel identification information, a correspondence between the data type corresponding to each function and the multi-channel identification information and a correspondence between each data processing function unit and the multi-channel identification information; storing the above correspondences; and performing the corresponding data processing according to the correspondences when the PCIe device side performs the data transmission with the PCIe host.

In the embodiment, the first data pre-processing module 32 pre-processes the to-be-sent data according to the multi-channel identification information to obtain the first multi-channel identification data and sends the first multi-channel identification data to the host side, which includes the following steps: the first data pre-processing module 32 adds, according to a data type of the to-be-sent data to be sent by the device side to the host side, the multi-channel identification information corresponding to the to-be-sent data to a data packet of the to-be-sent data to obtain the first multi-channel identification data; the first data pre-processing module 32 sends the first multi-channel identification data to the host side so that the host side performs the corresponding data processing.

In the embodiment, the multi-channel identification information reporting module 33 is configured to report the multi-channel identification information to the host side so that the host side pre-processes to-be-sent data on the host side according to the multi-channel identification information to obtain second multi-channel identification data, which includes the following step: the multi-channel identification information reporting module 33 reports the multi-channel identification information generated by the device side to the host side to enable the host side to complete multi-channel data processing configuration according to the multi-channel identification information, including: registering a data processing function unit corresponding to the multi-channel identification information, determining a correspondence between each data type and the multi-channel identification information and a correspondence between each data processing function unit and the multi-channel identification information and storing the above correspondences. The host side may add, according to a data type of the to-be-sent data on the host side, the multi-channel identification information corresponding to the to-be-sent data to a data packet of the to-be-sent data to obtain the second multi-channel identification data and send the second multi-channel identification data to the device side to process the second multi-channel identification data. The multi-channel identification information reporting module 33 reports the multi-channel identification information to the PCIe host in one of the following manners: the multi-channel identification information reporting module 33 directly reports the multi-channel identification information to the PCIe host after the PCIe device generates the multi-channel identification information; and the multi-channel identification information reporting module 33 reports the multi-channel identification information to the PCIe host in response to an acquisition request initiated by the PCIe host. The multi-channel identification information may be reported through a capabilities structure or may also be reported by a message in other forms. After receiving the multi-channel identification information, the PCIe host completes the multi-channel data processing configuration according to the multi-channel identification information.

In the embodiment, the first data parsing module 34 receives and parses the second multi-channel identification data sent by the host side. The following steps are included: the first data parsing module 34 parses the second multi-channel identification data to obtain the multi-channel identification information, and submits the second multi-channel identification data to the corresponding data processing function unit to parse a data packet of the second multi-channel identification data according to the multi-channel identification information. The data processing function unit refers to a function protocol stack or a function processing function corresponding to the second multi-channel identification data.

In the PCIe device provided by the embodiment, the multi-channel identification information is generated according to the data type currently supported; the to-be-sent data is pre-processed according to the multi-channel identification information to obtain the first multi-channel identification data, and the first multi-channel identification data is sent to the host side; the multi-channel identification information is reported to the host side so that the host side may pre-process the to-be-sent data on the host side according to the multi-channel identification information to obtain the second multi-channel identification data; and the second multi-channel identification data sent by the host side is received and parsed. The PCIe device enables a device and a host based on the PCIe interface technology to implement multi-channel data transmission and the corresponding data parsing through the multi-channel identification information, thereby ensuring high-speed data transmission, effectively reducing interference with wireless signals in the data transmission and ensuring system stability.

The embodiment further provides a PCIe host which may implement the multi-channel data processing with the PCIe described above. Referring to FIG. 4, the PCIe host includes a multi-channel identification information acquisition module 41, a second data pre-processing module 42 and a second data parsing module 43. The multi-channel identification information acquisition module 41 is configured to acquire the multi-channel identification information. The multi-channel identification information is generated by the PCIe device according to the data type currently supported. The second data pre-processing module 42 is configured to pre-process the to-be-sent data according to the multi-channel identification information to obtain the second multi-channel identification data, and send the second multi-channel identification data to the device side. The second data parsing module 43 is configured to receive and parse the first multi-channel identification data sent by the device side. The first multi-channel identification data is obtained from data pre-processing by the device side according to the multi-channel identification information.

In the embodiment, the multi-channel identification information acquisition module 41 acquires the multi-channel identification information in the following manner: the multi-channel identification information acquisition module 41 may receive the multi-channel identification information directly reported by the PCIe device or send the acquisition request to the PCIe device to acquire the multi-channel identification information. The multi-channel identification information may be in the form of the capabilities structure. The second data pre-processing module 42 pre-processes the to-be-sent data on the host side according to the multi-channel identification information to obtain the second multi-channel identification data, which includes the following step: the second data pre-processing module 42 adds, according to the data type of the to-be-sent data on the host side, the multi-channel identification information corresponding to the to-be-sent data to the data packet of the to-be-sent data to obtain the second multi-channel identification data. The second data pre-processing module 42 sends the second multi-channel identification data to the corresponding device side so that the device side processes the second multi-channel identification data.

In the embodiment, the second data parsing module 43 receives and parses the first multi-channel identification data sent by the device side, which includes the following steps: after the host side registers the data processing function unit corresponding to the multi-channel identification information, and after the host side receives the first multi-channel identification data sent by the device side, the second data parsing module 43 parses the first multi-channel identification data to obtain the multi-channel identification information and submits the first multi-channel identification data to the corresponding data processing function unit to parse the data packet of the first multi-channel identification data according to the multi-channel identification information. The data processing function unit refers to a function protocol stack or a function processing function corresponding to the first multi-channel identification data.

In the PCIe host provided by the embodiment, the multi-channel identification information is acquired; the to-be-sent data on the host side is pre-processed according to the multi-channel identification information to obtain the second multi-channel identification data, and the second multi-channel identification data is sent to the device side; and the first multi-channel identification data sent by the device side is received and parsed. The PCIe host enables the device and the host based on the PCIe interface technology to implement the multi-channel data transmission and the corresponding data processing, thereby ensuring the high-speed data transmission, effectively reducing the interference with the wireless signals in the data transmission and ensuring the system stability.

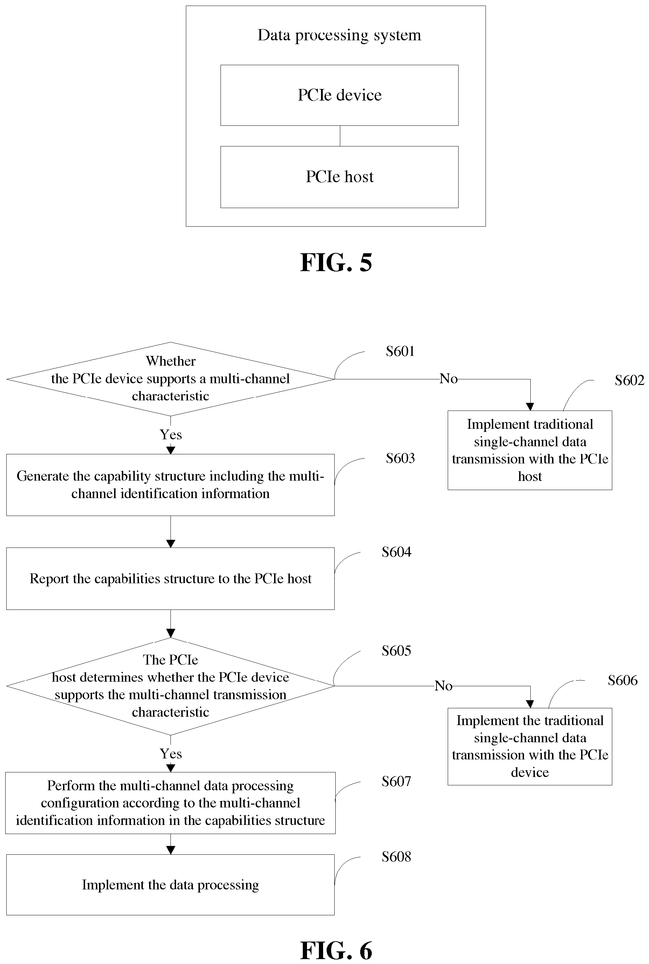

The embodiment further provides a data processing system. Referring to FIG. 5, the system includes the PCIe device and the PCIe host described above. In the PCIe-based multi-channel data processing system provided by the embodiment, the PCIe device generates the multi-channel identification information according to the data type currently supported and completes the multi-channel data processing configuration according to the multi-channel identification information; the PCIe device reports the multi-channel identification information to the PCIe host, the PCIe host receives the multi-channel identification information reported by the PCIe device and completes the multi-channel data processing configuration according to the multi-channel identification information; in the data processing process, the PCIe device and the PCIe host pre-process their respective to-be-sent data and parses the data sent by each other according to the multi-channel identification information to implement the multi-channel data transmission and other corresponding processing, thereby ensuring the high-speed data transmission, effectively reducing the interference with the wireless signals in the data transmission and ensuring the system stability.

### Embodiment 4

The embodiment provides a PCIe-based multi-channel data processing method, which is applied to a Linux system. A PCIe-based driver module is added to the Linux system and multi-channel data processing between a PCIe host and a PCIe device in the system is implemented by the PCIe-based multi-channel data processing method. Referring to FIG. 6, a device in the system implements the multi-channel data processing with the PCIe host by the PCIe-based multi-channel data processing method which includes the steps described below.

In step S601, whether the PCIe device supports a multi-channel characteristic is determined. If not, the flow jumps to step S602. If yes, the flow jumps to step S603.

After the PCIe device is powered on, whether the PCIe device needs to support a multi-channel transmission characteristic is determined according to the number of functions which requires to be supported by the PCIe device. If the PCIe device is a single-function device and only supports one function, it indicates that the PCIe device does not support the multi-channel transmission characteristic. In this case, it is unnecessary to generate a capability structure including multi-channel identification information, and the PCIe device and the corresponding PCIe host implement common single-channel data transmission. If the PCIe device supports two or more functions, that is, the PCIe device is a multi-function device, the PCIe device needs to implement multi-channel data transmission with the corresponding PCIe host, and a capability structure for the multi-channel transmission characteristic is generated according to data types and the number of functions supported by the PCIe device and reported to the PCIe host.

In step S602, the PCIe device implements traditional single-channel data transmission with the PCIe host.

In step S603, the capability structure including the multi-channel identification information is generated.

The process of generating the capability structure including the multi-channel identification information includes the following steps: when the PCIe device supports a plurality of functions, virtual channels are defined for transmitting data corresponding to the plurality of functions and Channel IDs are defined. Each virtual channel is one Channel and each PCIe device may support a plurality of Channels. Different Channels are used for independently transmitting different types of data. Each Channel has a unique channel identifier, one of which is the Channel ID. The Channel ID has a one-to-one correspondence with the function practically supported by the PCIe device. That is, data packets of different types of data have different Channel IDs, occupy different Channels and implement different functions. PCIe bus specifications require that the PCIe device must support a capabilities structure, that is, a capabilities pointer register may be included in the basic configuration space of the PCIe bus. The register stores a head pointer of a linked list of the capabilities structure. In one PCIe device, there may be a plurality of capability structures whose registers constitute one linked list. Each capability structure has a unique ID and each capability register has a pointer which points to a next capability structure; therefore, a single linked list is formed whose last capability structure has a pointer of 0. Generally, the PCIe device and the PCIe host transmit part of the information by use of the capabilities structure. Therefore, in the embodiment, the capability structure for reporting the multi-channel identification information may be defined, and the multi-channel identification information may be information of multiple Channels. The capability structure includes at least information about a configured group of Channel IDs of the PCIe device and may also include a total number of Channels of the PCIe device.

In the embodiment, the PCIe device may support four function ports including a DIAG (diagnostics) port, an AT (attention) port, a MODEM port and a NDIS (Network Driver Interface Specification) port. The DIAG port is used for device diagnostic information transmission, the AT port is used for AT command interactions, the MODEM port is used for AT and PPP (point to point protocol) protocol reporting number networking, and the NDIS port is used for virtual network interface card networking. That is, the PCIe device in the embodiment supports four channels whose Channel IDs are respectively 0x01, 0x02, 0x03 and 0x04. The Channel Number is 0x04 and the functions corresponding to the Channel IDs are diag, AT, MODEM and NDIS. The Channel IDs for these four ports may be set as follows:

| Channel ID | Function | Function Description |
|---|---|---|
| 0x01 | diag | Device diagnostic information transmission port |
| 0x02 | AT | AT command interaction port |
| 0x03 | MODEM | AT and PPP protocol reporting number networking port |
| 0x04 | NDIS | Virtual network interface card port |

After the Channel IDs for the functions of these four ports are set, the capabilities structure is generated according to the Channel IDs, which is shown in the following table:

| **Message Control** | **Next Pointer** | **Capability ID** |
|---|---|---|
| **Channel Number(0x04)** | | |
| **Channel IDs(0x01 0x02 0x03 0x04)** | | |

In the embodiment, after the Channel IDs corresponding to each function is set, or after the capabilities structure is generated, the PCIe device completes local multi-channel data processing configuration according to the Channel IDs and performs data processing according to the Channel IDs in the subsequent data processing process between the PCIe host, that is, the data to be transmitted may carry the correct Channel IDs and the received data is sent to corresponding data processing function units according to the Channel IDs.

In step S604, the capabilities structure is reported to the PCIe host.

To implement the data processing between the PCIe device and the PCIe host, the PCIe host needs to complete multi-channel data processing configuration according to the multi-channel identification information generated by the PCIe device, and the PCIe device needs to report the capabilities structure including the multi-channel identification information to the PCIe host.

In step S605, the PCIe host parses the capabilities structure generated by the PCIe device and determines whether the PCIe device supports the multi-channel transmission characteristic. If not, the flow jumps to step S606. If yes, the flow jumps to step S607.

In the case where the PCIe device and the PCIe host are powered on, the PCIe host reads the capabilities structure reported by the PCIe device, parses the capabilities structure, and determines whether the PCIe device supports the multi-channel transmission characteristic by determining whether the capabilities structure includes the corresponding Channel IDs or the Channel IDs with the information about the number of Channel IDs. If yes, the PCIe device supports the multi-channel transmission characteristic; if not, the PCIe device does not support the multi-channel transmission characteristic.

In step S606, the PCIe host implements the traditional single-channel data transmission with the PCIe device.

In step S607, the PCIe host performs the multi-channel data processing configuration according to the multi-channel identification information in the capabilities structure.

The PCIe host parses the capabilities structure to obtain the Channel IDs or the Channel IDs with the information about the number of Channel IDs and then registers a corresponding number of function devices in the system to implement initial configuration at the software level, that is, the corresponding number of data processing function units for processing the data corresponding to the Channel IDs. The data processing function unit may refer to a function protocol stack corresponding to each of the Channel IDs. In the subsequent data processing process, the data processing is implemented according to the Channel IDs, that is, the data to be transmitted may carry the correct Channel IDs and the received data is sent to the corresponding data processing function units according to the Channel IDs.

In step S608, the data processing is implemented.

After the PCIe host completes multi-channel configuration, the PCIe host may implement the multi-channel data transmission with the PCIe device, and the PCIe host and the PCIe device may also process the received multi-channel transmission data. When the PCIe device sends data to the PCIe host, the PCIe device searches for the corresponding Channel ID according to the data type of the data, adds the Channel ID to a data packet of the data, and sends the data packet to the PCIe host. When the PCIe host receives the data packet sent by the PCIe device, the PCIe host parses the data packet to obtain the Channel ID, determines the data processing function unit corresponding to the data according to the Channel ID, and transmits the data or the data packet to the corresponding data processing function unit for corresponding processing. When the PCIe host sends data to the PCIe device, the PCIe host searches for the corresponding Channel ID according to the data type of the data, adds the Channel ID to a data packet of the data and sends the data packet to the PCIe device. When the PCIe device receives the data packet sent by the PCIe host, the PCIe device parses the data packet to obtain the Channel ID, determines the data processing function unit corresponding to the data according to the Channel ID, and transmits the data or the data packet to the corresponding data processing function unit for corresponding processing. The data processing function unit in the embodiment may refer to a protocol stack corresponding to the data type in the PCIe device or the PCIe host. In addition, the corresponding Channel ID is added to the data packet sent by the PCIe host to the PCIe device according to the data type of the data packet and the data packet is sent the PCIe device by invoking a registered PCIe interface write function. When the PCIe host receives the data dent by the PCIe device, a data packet of the data is parsed by invoking a read function of a corresponding device driver registered according to the Channel ID.

In the embodiment, the data packet transmitted between the PCIe host and the PCIe device may have a format as follows: a Date header is a packet header of the data packet which is used for storing Channel ID information corresponding to the data and a Date field is used for storing data information. The data header of a DIAG packet contains the Channel ID 0x01. The data header of an AT packet contains the Channel ID 0x02. The data header of a MODEM packet contains the Channel ID 0x03. The data header of an NDIS packet contains the Channel ID 0x04.

| | |
|---|---|
| **Data header** | **Data** |

In the PCIe-based multi-channel data processing method provided by the embodiment, the PCIe device generates the multi-channel identification information according to the data type currently supported and completes the multi-channel data processing configuration according to the multi-channel identification information; the PCIe deice reports the multi-channel identification information to the PCIe host so that the PCIe host receives the multi-channel identification information reported by the PCIe device and completes the multi-channel data processing configuration according to the multi-channel identification information. In the data processing process, the PCIe device and the PCIe host implement the data processing according to the multi-channel identification information. The method implements the multi-channel data transmission and the corresponding data processing between the PCIe device and the PCIe host, thereby ensuring high-speed data transmission, effectively reducing interference with wireless signals in the data transmission and ensuring system stability.

Apparently, it should be understood by those skilled in the art that each of the modules or steps in the optional embodiments described above may be implemented by a general-purpose computing apparatus, the modules or steps may be concentrated on a single computing apparatus or distributed on a network composed of multiple computing apparatuses, and alternatively, the modules or steps may be implemented by program codes executable by the computing apparatuses, so that the modules or steps may be stored in a computer storage medium (such as a ROM/RAM, a magnetic disk or an optical disk) and executed by the computing apparatuses. In some circumstances, the illustrated or described steps may be executed in sequences different from those described herein, or the modules or steps may be made into various integrated circuit modules separately, or multiple modules or steps therein may be made into a single integrated circuit module for implementation. Therefore, the present invention is not limited to any specific combination of hardware and software.

### INDUSTRIAL APPLICABILITY

In the technical solutions of the present invention, the multi-channel identification information is generated according to the data type currently supported; the to-be-sent data is pre-processed according to the multi-channel identification information to obtain the first multi-channel identification data, and the first multi-channel identification data is sent to the host side; the multi-channel identification information is reported to the host side; and the second multi-channel identification data sent by the host side is received and parsed, where the second multi-channel identification data is obtained from the data pre-processing by the host side according to the multi-channel identification information. The present invention enables the device and the host based on the PCIe interface technology to implement the multi-channel data transmission and the corresponding data parsing through the multi-channel identification information, thereby ensuring the high-speed data transmission, effectively reducing the interference with the wireless signals in the data transmission and ensuring the system stability.

## Claims

1. A data processing method in a peripheral component interconnect express, PCIe, device, **characterized in that** the method comprises:
generating (101) multi-channel identification information according to a data type currently supported;
pre-processing (102) to-be-sent data according to the multi-channel identification information to obtain first multi-channel identification data, and sending the first multi-channel identification data to a host side through a PCIe interface;
reporting (103) the multi-channel identification information to the PCIe host side through the PCIe interface; and
receiving and parsing (104) second multi-channel identification data sent by the PCIe host side
through the PCIe interface, wherein the second multi-channel identification data is obtained from data pre-processing by the PCIe host side according to the multi-channel identification information.

2. The data processing method of claim 1, wherein the generating multi-channel identification information according to a data type currently supported comprises:
analyzing local function configuration information and determining the data type currently supported according to the local function configuration information; and
when the data type currently supported comprises at least two data types, generating the multi-channel identification information corresponding to each of the at least two data types.

3. The data processing method of claim 1 or 2, wherein the pre-processing to-be-sent data according to the multi-channel identification information to obtain first multi-channel identification data comprises:
adding, according to a data type of the to-be-sent data, the multi-channel identification information corresponding to the to-be-sent data to a data packet of the to-be-sent data to obtain the first multi-channel identification data.

4. The data processing method of claim 3, wherein the receiving and parsing second multi-channel identification data sent by the PCIe host side comprises:
parsing the second multi-channel identification data to obtain the multi-channel identification information, and parsing a data packet of the second multi-channel identification data according to the multi-channel identification information.

5. A data processing method in a peripheral component interconnect express, PCIe, host, **characterized in that** the method comprises:
acquiring (201) multi-channel identification information, wherein the multi-channel identification information is generated by a PCIe device side according to a data type currently supported;
pre-processing (202) to-be-sent data according to the multi-channel identification information to obtain second multi-channel identification data, and sending the second multi-channel identification data to the PCIe device side through a PCIe interface; and
receiving and parsing (203) first multi-channel identification data sent by the PCIe device side
through the PCIe interface, wherein the first multi-channel identification data is obtained from data pre-processing by the PCIe device side according to the multi-channel identification information.

6. The data processing method of claim 5, wherein the pre-processing to-be-sent data according to the multi-channel identification information to obtain second multi-channel identification data comprises:
adding, according to a data type of the to-be-sent data, the multi-channel identification information corresponding to the to-be-sent data to a data packet of the to-be-sent data to obtain the second multi-channel identification data.

7. The data processing method of claim 5 or 6, wherein the receiving and parsing first multi-channel identification data sent by the PCIe device side comprises:
parsing the first multi-channel identification data to obtain the multi-channel identification information, and parsing a data packet of the first multi-channel identification data according to the multi-channel identification information.

8. A peripheral component interconnect express, PCIe, device, **characterized in that** the device comprises:
a multi-channel identification information generation module (31), which is configured to generate multi-channel identification information according to a data type currently supported;
a first data pre-processing module (32), which is configured to pre-process to-be-sent data according to the multi-channel identification information to obtain first multi-channel identification data, and send the first multi-channel identification data to a PCIe
host side through a PCIe interface;
a multi-channel identification information reporting module (33), which is configured to report the multi-channel identification information to the PCIe host side through the PCIe interface; and
a first data parsing module (34), which is configured to receive and parse second multi-channel identification data sent by the PCIe host side through the PCIe interface, wherein the second multi-channel identification data is obtained from data pre-processing by the PCIe host side according to the multi-channel identification information.

9. A peripheral component interconnect express, PCIe, host, **characterized in that** the host comprises
a multi-channel identification information acquisition module (41), which is configured to acquire multi-channel identification information, wherein the multi-channel identification information is generated by a PCIe
device side according to a data type currently supported;
a second data pre-processing module (42), which is configured to pre-process to-be-sent data according to the multi-channel identification information to obtain second multi-channel identification data, and send the second multi-channel identification data to the PCIe device side through a PCIe interface; and
a second data parsing module (43), which is configured to receive and parse first multi-channel identification data sent by the PCIe device side through the PCIe interface, wherein the first multi-channel identification data is obtained from data pre-processing by the PCIe device side according to the multi-channel identification information.

10. A data processing system, **characterized in that** the system comprises:
the peripheral component interconnect express device of claim 8; and
the peripheral component interconnect express host of claim 9.

11. A storage medium, comprising stored programs, **characterized in that**, when executed, the programs execute the method of any one of claims 1 to 4 or claims 5 to 7.

## Patentansprüche

1. Datenverarbeitungsverfahren in einer Peripheriegeräteverbindungsexpress-, PCIe-, Vorrichtung, **dadurch gekennzeichnet, dass** das Verfahren Folgendes umfasst:
Generieren (101) von Mehrkanalidentifikationsinformationen gemäß einem derzeit unterstützten Datentyp;
Vorverarbeiten (102) zu sendender Daten gemäß den Mehrkanalidentifikationsinformationen zum Erhalten erster Mehrkanalidentifikationsdaten, und Senden der ersten Mehrkanalidentifikationsdaten zu einer Host-Seite durch eine PCIe-Schnittstelle;
Melden (103) der Mehrkanalidentifikationsinformationen an die PCIe-Host-Seite durch die PCIe-Schnittstelle; und
Empfangen und Parsen (104) zweiter Mehrkanalidentifikationsdaten, die von der PCIe-Host-Seite durch die PCIe-Schnittstelle gesendet wurden,
wobei die zweiten Mehrkanalidentifikationsdaten aus einer Datenvorverarbeitung durch die PCIe-Host-Seite gemäß den Mehrkanalidentifikationsinformationen erhalten werden.

2. Datenverarbeitungsverfahren nach Anspruch 1, wobei das Generieren von Mehrkanalidentifikationsinformationen gemäß einem derzeit unterstützten Datentyp Folgendes umfasst:
Analysieren lokaler Funktionskonfigurationsinformationen und Bestimmen des derzeit unterstützten Datentyps gemäß den lokalen Funktionskonfigurationsinformationen; und
wenn der derzeit unterstützte Datentyp mindestens zwei Datentypen umfasst, Generieren der Mehrkanalidentifikationsinformationen, die jedem der mindestens zwei Datentypen entsprechen.

3. Datenverarbeitungsverfahren nach Anspruch 1 oder 2, wobei das Vorverarbeiten zu sendender Daten gemäß den Mehrkanalidentifikationsinformationen zum Erhalten erster Mehrkanalidentifikationsdaten Folgendes umfasst:
Hinzufügen, gemäß einem Datentyp der zu sendenden Daten, der Mehrkanalidentifikationsinformationen, die den zu sendenden Daten entsprechen, zu einem Datenpaket der zu sendenden Daten, um die ersten Mehrkanalidentifikationsdaten zu erhalten.

4. Datenverarbeitungsverfahren nach Anspruch 3, wobei das Empfangen und Parsen zweiter Mehrkanalidentifikationsdaten, die von der PCIe-Host-Seite gesendet wurden, Folgendes umfasst:
Parsen der zweiten Mehrkanalidentifikationsdaten, um die Mehrkanalidentifikationsinformationen zu erhalten, und Parsen eines Datenpakets der zweiten Mehrkanalidentifikationsdaten gemäß den Mehrkanalidentifikationsinformationen.

5. Datenverarbeitungsverfahren in einem Peripheriegeräteverbindungsexpress-, PCIe-, Host, **dadurch gekennzeichnet, dass** das Verfahren Folgendes umfasst:
Erfassen (201) von Mehrkanalidentifikationsinformationen, wobei die Mehrkanalidentifikationsinformationen von einer PCIe-Vorrichtungsseite gemäß einem derzeit unterstützten Datentyp generiert werden;
Vorverarbeiten (202) zu sendender Daten gemäß den Mehrkanalidentifikationsinformationen zum Erhalten zweiter Mehrkanalidentifikationsdaten, und Senden der zweiten Mehrkanalidentifikationsdaten zu der PCIe-Vorrichtungsseite durch eine PCIe-Schnittstelle; und
Empfangen und Parsen (203) erster Mehrkanalidentifikationsdaten, die von der PCIe-Vorrichtungsseite durch die PCIe-Schnittstelle gesendet wurden,
wobei die ersten Mehrkanalidentifikationsdaten aus einer Datenvorverarbeitung durch die PCIe-Vorrichtungsseite gemäß den Mehrkanalidentifikationsinformationen erhalten werden.

6. Datenverarbeitungsverfahren nach Anspruch 5, wobei das Vorverarbeiten zu sendender Daten gemäß den Mehrkanalidentifikationsinformationen zum Erhalten zweiter Mehrkanalidentifikationsdaten Folgendes umfasst:
Hinzufügen, gemäß einem Datentyp der zu sendenden Daten, der Mehrkanalidentifikationsinformationen, die den zu sendenden Daten entsprechen, zu einem Datenpaket der zu sendenden Daten, um die zweiten Mehrkanalidentifikationsdaten zu erhalten.

7. Datenverarbeitungsverfahren nach Anspruch 5 oder 6, wobei das Empfangen und Parsen erster Mehrkanalidentifikationsdaten, die von der PCIe-Vorrichtungsseite gesendet wurden, Folgendes umfasst:
Parsen der ersten Mehrkanalidentifikationsdaten, um die Mehrkanalidentifikationsinformationen zu erhalten, und Parsen eines Datenpakets der ersten Mehrkanalidentifikationsdaten gemäß den Mehrkanalidentifikationsinformationen.

8. Peripheriegeräteverbindungsexpress-, PCIe-, Vorrichtung, **dadurch gekennzeichnet, dass** die Vorrichtung Folgendes umfasst:
ein Mehrkanalidentifikationsinformationsgenerierungsmodul (31), das konfiguriert ist, um Mehrkanalidentifikationsinformationen gemäß einem derzeit unterstützten Datentyp zu generieren;
ein erstes Datenvorverarbeitungsmodul (32), das konfiguriert ist, um zu sendende Daten gemäß den Mehrkanalidentifikationsinformationen vorzuverarbeiten, um erste Mehrkanalidentifikationsdaten zu erhalten, und um die ersten Mehrkanalidentifikationsdaten zu einer PCIe-Host-Seite durch eine PCIe-Schnittstelle zu senden;
ein Mehrkanalidentifikationsinformationsmeldemodul (33), das konfiguriert ist, um die Mehrkanalidentifikationsinformationen an die PCIe-Host-Seite durch die PCIe-Schnittstelle zu melden; und
ein erstes Daten-Parsing-Modul (34), das konfiguriert ist, um zweite Mehrkanalidentifikationsdaten, die von der PCIe-Host-Seite durch die PCIe-Schnittstelle gesendet wurden, zu empfangen und zu parsen,
wobei die zweiten Mehrkanalidentifikationsdaten aus einer Datenvorverarbeitung durch die PCIe-Host-Seite gemäß den Mehrkanalidentifikationsinformationen erhalten werden.

9. Peripheriegeräteverbindungsexpress-, PCIe-, Host, **dadurch gekennzeichnet, dass** der Host Folgendes umfasst:
ein Mehrkanalidentifikationsinformationserfassungsmodul (41), das konfiguriert ist, um Mehrkanalidentifikationsinformationen zu erfassen, wobei die Mehrkanalidentifikationsinformationen von einer PCIe-Vorrichtungsseite gemäß einem derzeit unterstützten Datentyp generiert werden;
ein zweites Datenvorverarbeitungsmodul (42), das konfiguriert ist, um zu sendende Daten gemäß den Mehrkanalidentifikationsinformationen vorzuverarbeiten, um zweite Mehrkanalidentifikationsdaten zu erhalten, und um die zweiten Mehrkanalidentifikationsdaten zu der PCIe-Vorrichtungsseite durch eine PCIe-Schnittstelle zu senden; und
ein zweites Daten-Parsing-Modul (43), das konfiguriert ist, um erste Mehrkanalidentifikationsdaten, die von der PCIe-Vorrichtungsseite durch die PCIe-Schnittstelle gesendet wurden, zu empfangen und zu parsen,
wobei die ersten Mehrkanalidentifikationsdaten aus einer Datenvorverarbeitung durch die PCIe-Vorrichtungsseite gemäß den Mehrkanalidentifikationsinformationen erhalten werden.

10. Datenverarbeitungssystem, **dadurch gekennzeichnet, dass** das System Folgendes umfasst:
die Peripheriegeräteverbindungsexpressvorrichtung nach Anspruch 8; und
den Peripheriegeräteverbindungsexpresshost nach Anspruch 9.

11. Speichermedium, umfassend gespeicherte Programme, **dadurch gekennzeichnet, dass** die Programme bei Ausführung das Verfahren nach einem der Ansprüche 1 bis 4 oder Ansprüche 5 bis 7 ausführen.

## Revendications

1. Procédé de traitement de données dans un dispositif express d'interconnexion de composants périphériques, PCIe, **caractérisé en ce que** le procédé comprend :
la génération (101) d'informations d'identification à canaux multiples selon un type de données actuellement pris en charge ;
le prétraitement (102) des données à envoyer selon les informations d'identification à canaux multiples pour obtenir des premières données d'identification à canaux multiples, et l'envoi des premières données d'identification à canaux multiples à un côté hôte via une interface PCIe ;
le signalement (103) des informations d'identification à canaux multiples au côté hôte PCIe à travers l'interface PCIe ; et
la réception et l'analyse (104) des secondes données d'identification à canaux multiples envoyées par le côté hôte PCIe via l'interface PCIe,
dans lequel les secondes données d'identification à canaux multiples sont obtenues à partir du prétraitement de données par le côté hôte PCIe selon les informations d'identification à canaux multiples.

2. Procédé de traitement de données selon la revendication 1, dans lequel la génération d'informations d'identification à canaux multiples selon un type de données actuellement pris en charge comprend :
l'analyse des informations de configuration de fonction locale et la détermination du type de données actuellement pris en charge selon les informations de configuration de fonction locale ; et
lorsque le type de données actuellement pris en charge comprend au moins deux types de données, la génération des informations d'identification à canaux multiples correspondant à chacun des au moins deux types de données.

3. Procédé de traitement de données selon la revendication 1 ou 2, dans lequel le pré-traitement des données à envoyer selon les informations d'identification à canaux multiples pour obtenir des premières données d'identification à canaux multiples comprend :
l'ajout, selon un type de données des données à envoyer, des informations d'identification à canaux multiples correspondant aux données à envoyer à un paquet de données des données à envoyer pour obtenir les premières données d'identification à canaux multiples.

4. Procédé de traitement de données selon la revendication 3, dans lequel la réception et l'analyse des secondes données d'identification à canaux multiples envoyées par le côté hôte PCIe comprennent :
l'analyse des secondes données d'identification à canaux multiples pour obtenir les informations d'identification à canaux multiples, et l'analyse d'un paquet de données des secondes données d'identification à canaux multiples selon les informations d'identification à canaux multiples.

5. Procédé de traitement de données dans un hôte express d'interconnexion de composants périphériques, PCIe, **caractérisé en ce que** le procédé comprend :
l'acquisition (201) d'informations d'identification à canaux multiples, dans lequel les informations d'identification à canaux multiples sont générées par un côté dispositif PCIe selon un type de données actuellement pris en charge ;
le pré-traitement (202) des données à envoyer selon les informations d'identification à canaux multiples pour obtenir des secondes données d'identification à canaux multiples, et l'envoi des secondes données d'identification à canaux multiples au côté dispositif PCIe à travers une interface PCIe ; et
la réception et l'analyse (203) des premières données d'identification à canaux multiples envoyées par le côté dispositif PCIe à travers l'interface PCIe,
dans lequel les premières données d'identification à canaux multiples sont obtenues à partir d'un prétraitement de données par le côté dispositif PCIe selon les informations d'identification à canaux multiples.

6. Procédé de traitement de données selon la revendication 5, dans lequel le prétraitement des données à envoyer selon les informations d'identification à canaux multiples pour obtenir des secondes données d'identification à canaux multiples comprend :
l'ajout, selon un type de données des données à envoyer, des informations d'identification à canaux multiples correspondant aux données à envoyer à un paquet de données des données à envoyer pour obtenir les secondes données d'identification à canaux multiples.

7. Procédé de traitement de données selon la revendication 5 ou 6, dans lequel la réception et l'analyse des premières données d'identification à canaux multiples envoyées par le côté dispositif PCIe comprennent :
l'analyse des premières données d'identification à canaux multiples pour obtenir les informations d'identification à canaux multiples, et l'analyse d'un paquet de données des premières données d'identification à canaux multiples selon les informations d'identification à canaux multiples.

8. Dispositif express d'interconnexion de composants périphériques, PCIe, **caractérisé en ce que** le dispositif comprend :
un module de génération d'informations d'identification à canaux multiples (31) qui est configuré pour générer des informations d'identification à canaux multiples selon un type de données actuellement pris en charge ;
un premier module de prétraitement de données (32), qui est configuré pour prétraiter des données à envoyer selon les informations d'identification à canaux multiples afin d'obtenir des premières données d'identification à canaux multiples, et envoyer les premières données d'identification à canaux multiples à un côté hôte PCIe à travers une interface PCIe ;
un module de signalement d'informations d'identification à canaux multiples (33) qui est configuré pour signaler les informations d'identification à canaux multiples au côté dispositif PCIe à travers l'interface PCIe ; et
un premier module d'analyse de données (34) qui est configuré pour recevoir et analyser des secondes données d'identification à canaux multiples envoyées par le côté hôte PCIe à travers l'interface PCIe, dans lequel les secondes données d'identification à canaux multiples sont obtenues à partir du prétraitement des données par le côté hôte PCIe selon les informations d'identification à canaux multiples.

9. Hôte express d'interconnexion de composants périphériques, PCIe, **caractérisé en ce que** l'hôte comprend
un module d'acquisition d'informations d'identification à canaux multiples (41), qui est configuré pour acquérir des informations d'identification à canaux multiples, dans lequel les informations d'identification à canaux multiples sont générées par un côté dispositif PCIe selon un type de données actuellement pris en charge ;
un second module de prétraitement de données (42), qui est configuré pour prétraiter des données à envoyer selon les informations d'identification à canaux multiples pour obtenir des secondes données d'identification à canaux multiples, et envoyer les secondes données d'identification à canaux multiples au côté dispositif PCIe à travers une interface PCIe ; et
un second module d'analyse de données (43), qui est configuré pour recevoir et analyser des premières données d'identification à canaux multiples envoyées par le côté dispositif PCIe à travers l'interface PCIe, dans lequel les premières données d'identifications à canaux multiples sont obtenues à partir du prétraitement des données par le côté dispositif PCIe selon les informations d'identification à canaux multiples.

10. Système de traitement de données, **caractérisé en ce que** le système comprend :
le dispositif express d'interconnexion de composants périphériques selon la revendication 8 ; et
l'hôte express d'interconnexion de composants périphériques selon la revendication 9.

11. Support de stockage, comprenant des programmes stockés, **caractérisé en ce que**, lorsqu'ils sont exécutés, les programmes exécutent le procédé selon l'une quelconque des revendications 1 à 4 ou des revendications 5 à 7.
